# FASCICULE DE BREVET EUROPEEN

(11) **EP 0 636 507 B1**
(45) Date de publication et mention de la délivrance du brevet: **08.01.1997**
(21) Numéro de dépôt: 94400757.4
(22) Date de dépôt: 06.04.1994
(51) Int. Cl.: B60K 35/00, G07C 1/30, B60Q 3/04

(54) **Dispositif pour lire des informations de l'extérieur d'un véhicule automobile**
Einrichtung um von ausserhalb eines Kraftfahrzeuges Informationen zu lesen
Device for reading informations from the enterior of a vehicle

(30) Priorité: 07.04.1993 FR 9304143
(43) Date de publication de la demande: 01.02.1995
(73) Titulaire: ECIA - EQUIPEMENTS ET COMPOSANTS POUR L'INDUSTRIE AUTOMOBILE, F-25400 Audincourt (FR)
(72) Inventeur: Escaravage, Gérard, F-25700 Valentigney (FR)
(74) Mandataire: Polus, Camille

(56) Documents cités:
- EP-A- 0 297 531
- WO-A-88/08173
- WO-A-92/08210
- FR-A- 2 667 026
- US-A- 5 077 643

## Description

La présente invention concerne les véhicules automobiles notamment terrestres et, plus particulièrement, un dispositif permettant de rendre visible de l'extérieur, au travers d'une baie, les informations d'un afficheur placé à l'intérieur d'un véhicule et porté par un élément de ce dernier.

Dans de nombreuses circonstances au cours de l'utilisation d'un véhicule automobile terrestre, telle une voiture dite de tourisme, il est nécessaire qu'on puisse voir de l'extérieur des informations qui sont apparentes à l'intérieur du véhicule. Ce type de situation se présente, par exemple, dans les zones à stationnement règlementé où il est nécessaire de laisser visible un coupon délivré par un orodateur et sur lequel figurent l'instant de la délivrance ainsi que la durée pour laquelle un droit de stationnement a été acquitté afin que les agents chargés du contrôle et du respect des modalités de stationnement puissent se livrer aux opérations de vérification nécessaires et, au besoin, en tirer les conséquences en cas de leur non-respect.

Depuis un certain nombre d'années, l'usage de l'électronique et de l'informatique s'est développé à bord des véhicules et, de même, l'usage de la monétique s'est propagé en remplacement de la monnaie manuelle ou scripturale. La monétique fait appel à des cartes bancaires qui permettent de débiter de manière automatique le compte d'un tiré et de créditer celui d'un bénéficiaire tenus par des établissements financiers tels des banques, et aussi à des cartes de paiement dites "à puce", qu'elles soient "rechargeables" ou pas, et qui permettent d'imputer directement sur celles-ci le coût de l'opération qui vient en déduction du montant initial dont elles ont été créditées, comme c'est par exemple le cas des cartes utilisées pour les télécommunications.

L'usage de la monétique a connu un nouveau développement pour son application notamment au péage autoroutier, que celui-ci s'effectue de manière statique par arrêt au poste de contrôle ou de manière dynamique, "au vol", en donnant lieu simplement à un ralentissement, les échanges se faisant par télétransmission entre le véhicule et le poste de contrôle.

WO-A-92/08210 décrit un dispositif permettant de rendre visible de l'extérieur au travers d'une baie d'un véhicule automobile les informations d'un afficheur à écran, mis en oeuvre à l'aide d'une carte amovible à mémoire, placé à l'intérieur du véhicule et porté par un élément de ce dernier, le dispositif étant du type comprenant au moins une touche de commande, un support qui est destiné à être fixé à cet élément et qui est fait d'une embase délimitant une chambre et de moyens de retenue pour son montage sur cet élément, un boîtier qui est destiné à être monté mobile dans la chambre de ce support et qui est fait d'un corps avec un logement pour recevoir cet afficheur et qui est pourvu d'une fenêtre pour laisser voir l'écran de l'afficheur et d'au moins une ouverture pour la manoeuvre de la touche ainsi que d'une fente pour l'insertion de la carte, un mécanisme de guidage pour assujettir sur ce support ce boîtier afin de lui permettre un déplacement aboutissant à une première position où cet écran est visible de l'extérieur au travers de cette baie, un agencement d'immobilisation pour maintenir fixe le boîtier relativement au support dans ladite première position et des raccords électriques pour connecter l'afficheur.

Le but de l'invention est de rendre visible de l'extérieur, au travers d'une baie, les informations d'un afficheur à écran et au moins une touche de commande, mis en oeuvre à l'aide d'une carte à mémoire, placé à l'intérieur d'un véhicule et porté par un élément de ce dernier, notamment pour la gestion du stationnement du véhicule dans une zone à stationnement réglementé par exemple urbaine.

A cet effet, l'invention a pour objet un dispositif permettant de rendre visible de l'extérieur, au travers d'une baie, les informations d'un afficheur à écran, du type précité, caractérisé en ce que le boîtier est également pourvu d'un organe de préhension et d'une trappe de visite, la touche étant également visible de l'extérieur au travers de la baie du véhicule, le mécanisme de guidage permettant un guidage de course déterminée entre une deuxième position où l'écran n'est pratiquement pas visible de l'extérieur du véhicule au travers de la baie et la première position, l'agencement d'immobilisation permettant également le maintien du boîtier relativement au support dans ladite seconde position.

D'autres caractéristiques de l'invention ressortiront de la lecture de la description et des revendications qui suivent ainsi que de l'examen du dessin annexé, donné seulement à titre d'exemple, où :
- les Figures 1A et 1B sont des vues d'un mode de réalisation d'un dispositif selon l'invention, illustré dans ses deux positions, implanté dans le panneau intérieur d'une portière;
- la Figure 2 est une vue perspective schématique d'un support du dispositif de la Figure 1;
- les Figures 3A et 3B sont des vues d'un boîtier du dispositif illustré sur la Figure 1, vu de deux côtés opposés et dans chacune de ses deux dispositions;
- la Figure 4 est une vue d'un dispositif selon l'invention implanté dans un couvercle de boîte à gants ou vide-poches;
- les Figures 5A et 5B sont des vues du mode de réalisation d'un boitier d'un dispositif selon l'invention, observé de deux côtés opposés pour l'implantation de la Figure 4;
- la Figure 6 est une vue d'un support pour ce mode de réalisation de cette implantation;
- les Figures 7A et 7B sont des vues de ce mode de réalisation du dispositif dans chacune de ses deux positions;
- les Figures 8A et 8B sont des vues d'un autre mode d'un dispositif selon l'invention illustrée dans chacune de ses deux positions pour une implantation dans un pare-soleil;
- les Figures 9A et 9B sont des vues de détail dont l'une partiellement en coupe de ce mode de réalisation;
- les Figures 10A et 10B sont des vues de détail dont l'une partiellement en coupe du support de ce mode de réalisation; et
- les Figures 11A et 11B sont des vues du boîtier de ce mode de réalisation, l'une en perspective et l'autre partiellement en coupe observé de deux côtés opposés.

Les véhicules automobiles notamment terrestres étant bien connus dans la technique de même que les afficheurs à écran et éventuellement à touches de commande et mise en oeuvre par carte à mémoire par exemple du type de ceux à cristaux liquides utilisés pour les calculettes et autres, on ne décrira dans ce qui suit que ce qui concerne directement ou indirectement l'invention. Pour le surplus, l'homme du métier du secteur technique considéré puisera dans les solutions classiques courantes à sa disposition pour faire face aux problèmes particuliers auxquels il est confronté.

Dans ce qui suit, on utilise toujours un même numéro de référence pour désigner un élément homologue, quel que soit le mode de réalisation ou sa variante d'exécution.

Pour la commodité de l'exposé, on décrira successivement chacun des constituants d'un dispositif selon l'invention permettant de rendre visible de l'extérieur, au travers d'une baie les informations d'un afficheur à écran et au moins une touche de commande et mise en oeuvre par carte à mémoire, placé à l'intérieur d'un véhicule et porté par un élément de ce dernier, avant d'en indiquer la fabrication au besoin, et le montage et le fonctionnement.

Le dispositif selon l'invention est destiné à être monté à bord d'un véhicule automobile terrestre et, de préférence, dans son habitacle de manière à pouvoir rendre visible ou lisible à volonté de l'extérieur du véhicule, les informations d'un afficheur placé à l'intérieur de ce dernier, et cela au travers d'une baie de préférence vitrée telle un pare-brise ou une vitre de portière. Ce dispositif est destiné à être porté par un élément intérieur du véhicule, de préférence mobile, tel un panneau intérieur de portière, un couvercle de boîte à gants ou de vide-poches ou un pare-soleil. Un tel élément 100 est pourvu d'une découpe 101 de manière à y ménager un emplacement 102 destiné à recevoir une partie du dispositif selon l'invention comme on le comprendra par la suite, et notamment son support.

Pour la mise en oeuvre de l'invention, on utilise un afficheur A, de tout type classique, avec un écran E par exemple à cristaux liquides et au moins une touche T de commande. Un tel afficheur traditionnel est équipé d'une source d'énergie électrique interne autonome, rechargeable ou non, et/ou est équipé de bornes pour sa connexion à une source d'énergie qui lui est extérieure telle que la batterie d'accumulateur du véhicule. Un tel afficheur est mis en oeuvre à l'aide d'une carte à mémoire M de tout type classique de préférence normalisé.

Un dispositif selon l'invention comprend, notamment, un support 10, un boîtier 20, un mécanisme de guidage 30, un agencement d'immobilisation 40 et des raccords électriques 50.

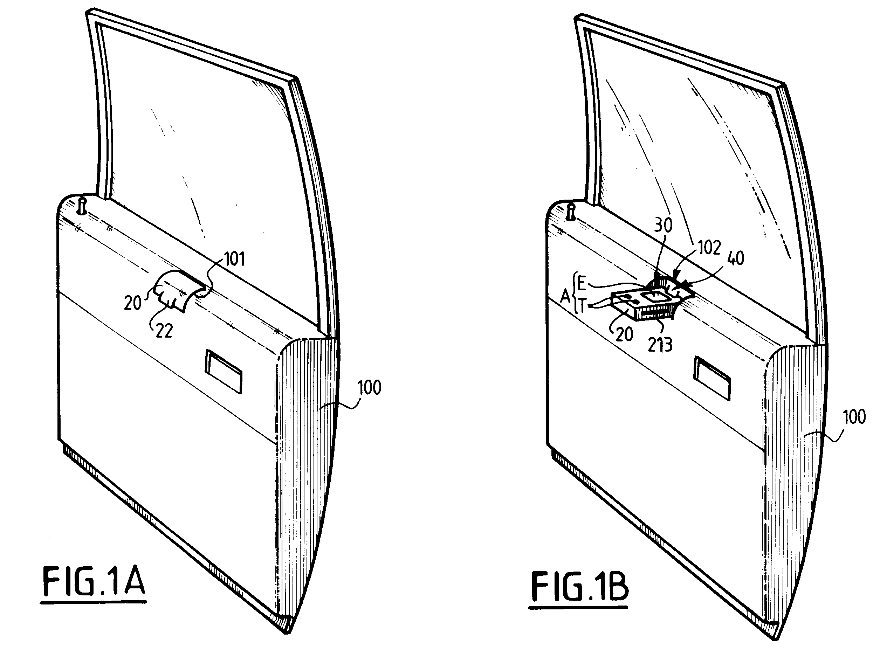

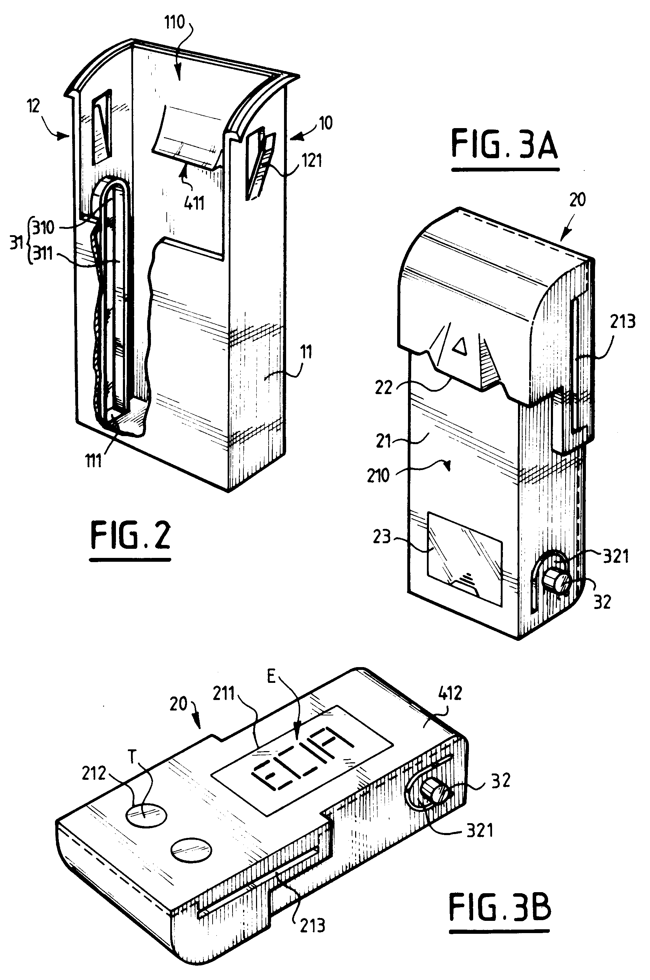

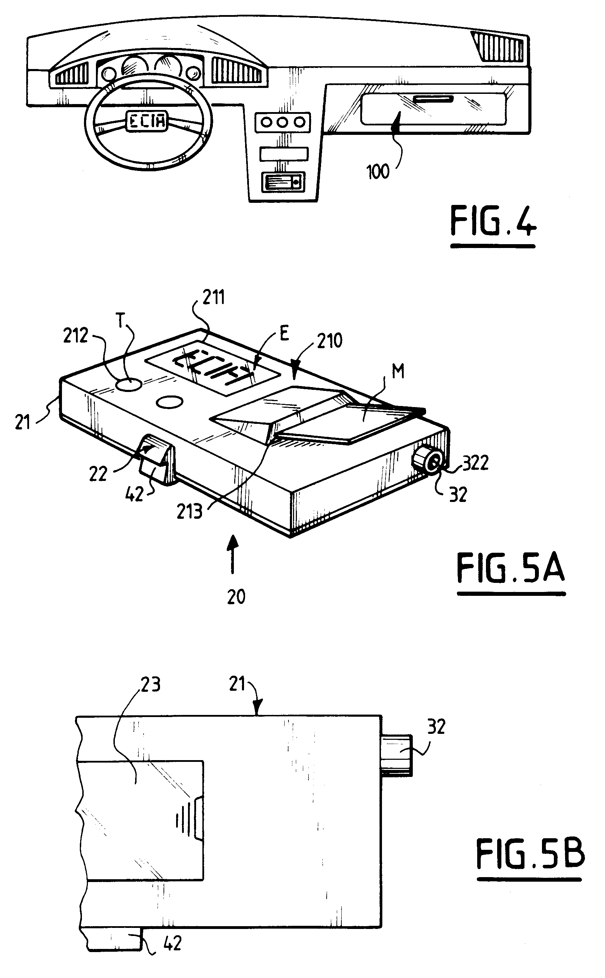

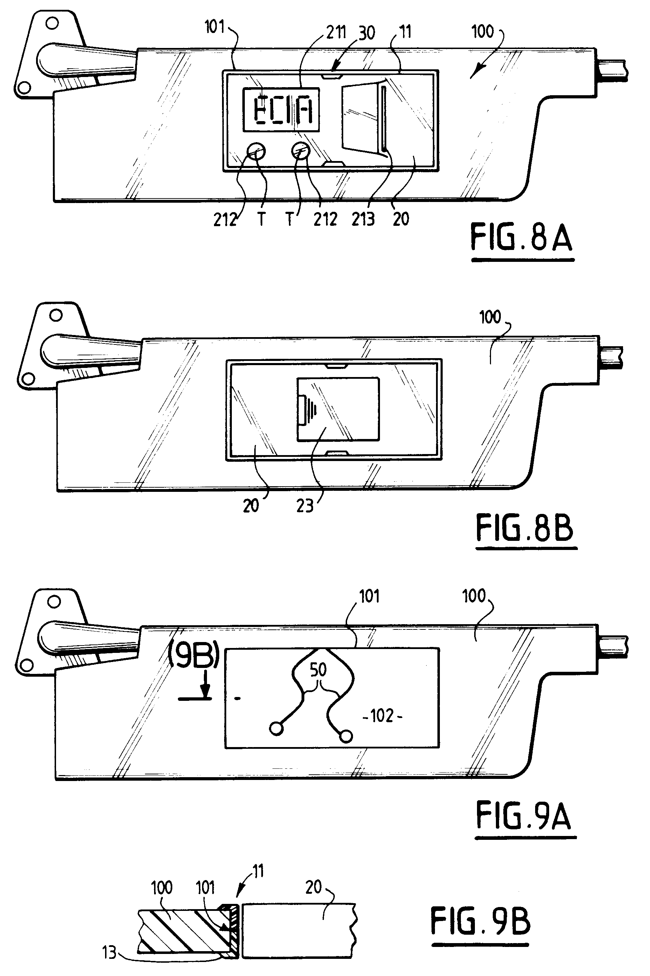

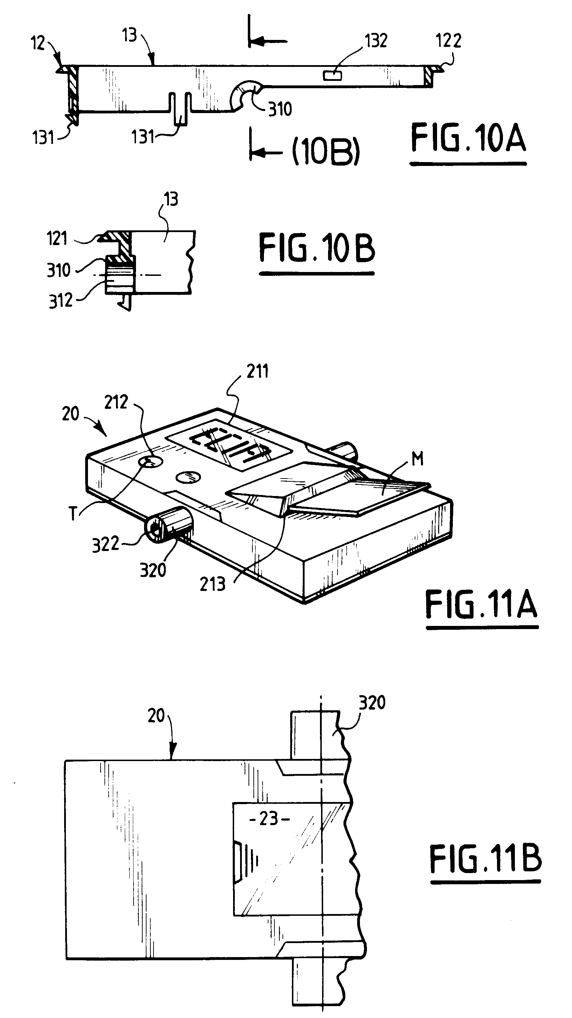

Le support 10 est destiné à être fixé à l'élément 100 et, de préférence, logé dans l'emplacement 102 délimité par la découpe 101. Le support 10 comprend une embase 11 délimitant une chambre 110 et des moyens de retenue 12 pour son montage sur cet élément 100. L'embase 11 est soit monobloc par exemple comme pour les modes de réalisation illustrés sur les Figures 1 à 3 qui correspond à une implantation du dispositif selon l'invention dans le panneau intérieur d'une portière, et sur les Figures 4 à 7 qui correspond à une implantation du dispositif selon l'invention dans un couvercle de boîte à gants ou de vide-poches. L'embase 11 peut aussi être faite en plusieurs parties, comme illustré sur les Figures 8 à 11, qui correspond à une implantation d'un dispositif selon l'invention dans un pare-soleil. Dans ce cas dernier, l'embase 11 est faite de deux demi-cadres 13, symétriques, maintenus l'un sur l'autre à l'aide d'un moyen d'assemblage 130 de manière à chevaucher la découpe 101. Ces moyens d'assemblage 130 opèrent de préférence par encliquetage élastique et sont faits, par exemple, de languettes 131 élastiques à crochet et de trous 132 auxquels elles s'agrippent.

Les moyens de retenue 12 qui permettent de fixer le support sur l'élément 100 sont, par exemple, des pattes 121 élastiques et/ou un rebord 122.

Tout ceci est clairement illustré sur les différentes figures du dessin.

Le boîtier 20 est conçu pour contenir un afficheur A de manière à ce que l'on puisse voir et lire son écran E et commander ou agir sur son fonctionnement à l'aide d'au moins l'une des touches T dont il est équipé, s'il y a lieu après mise en oeuvre par insertion d'une carte à mémoire M. Le boîtier 20 est destiné à être monté mobile dans le support 10, entre une première position où l'écran n'est pratiquement pas visible de l'extérieur du véhicule au travers d'une baie et une seconde position où cet écran est visible de l'extérieur au travers d'au moins une baie. Le boîtier 20 comprend un corps 21 fait d'un compartiment et d'un couvercle qui délimitent ensemble un logement 210 pour recevoir l'afficheur A. Ce corps 21 est pourvu d'une fenêtre 211 pour laisser voir l'écran E de l'afficheur, et d'au moins une ouverture 212 pour la manoeuvre des touches T. Ce corps est aussi pourvu de préférence d'une fente 213 pour l'insertion d'une carte M amovible à mémoire de tout type connu tel une carte bancaire ou une carte à pré-paiement de tout type approprié convenable. Le boîtier est aussi muni s'il y a lieu d'un organe de préhension 22 ou similaire pour les raisons que l'on comprendra par la suite, ainsi que d'une trappe 23 de visite fermée par un volet mobile permettant, lorsque cela est nécessaire, le raccordement électrique de l'afficheur.

Le mécanisme de guidage 30 sert à assujettir, sur le support 10, le boîtier 20 afin de permettre à ce dernier un déplacement entre ses deux positions selon une course déterminée. Le mécanisme de guidage 30 comprend au moins un guide 31 et un doigt 32 qui coopère avec le guide 31. Comme on le voit clairement sur les figures du dessin, l'un de ces guide 31 et doigt 32 est porté par le support 10 et l'autre de ceux-ci est porté par le boîtier 20. Il est clair que la solution inverse peut être utilisée totalement ou en partie. Le guide 31 comprend un palier 310 s'il y a lieu creux et le doigt 32 comprend un tourillon 320 s'il y a lieu creux, de manière à rendre mobile en rotation le boîtier 20 relativement au support 10. S'il y a lieu, en plus, le guide 31 comprend aussi une rampe 311, de préférence double, où peut se déplacer le tourillon 320 de manière à rendre le boîtier 20 aussi mobile en translation, en plus de la rotation, comme on le verra par la suite. De préférence, l'un d'au moins de ces palier 310 et tourillon 320 est porté par une lame 321 élastique ou oreille ou similaire facilitant le montage et/ou le fonctionnement, comme on le comprendra par la suite.

L'agencement d'immobilisation 40 comprend des butées 41 pour définir la seconde position du boîtier 20 où l'écran de l'afficheur est visible de l'extérieur, et s'il y a lieu un verrou 42 pour maintenir le boîtier dans sa première position où l'écran de l'afficheur n'est pratiquement pas visible de l'extérieur. Les butées 41 sont constituées d'un arrêtoir 411 sur l'embase 11 du support 10 et d'un appui 412 sur le corps 21 du boîtier 20. Le verrou 42 de tout type approprié classique, comprend une gâche et un pêne et peut être fait d'un seul tenant avec l'organe de préhension 23.

Pour permettre une connexion électrique et la faciliter, lorsqu'il est nécessaire de relier l'afficheur à une source d'énergie électrique à l'aide des raccords 50, au moins un orifice 111 est ménagé dans l'embase 11 du support 10 de manière à déboucher dans la chambre 110 pour le passage des raccords électriques 50. De même, un alésage 322 transperce le doigt 32 et plus particulièrement le tourillon 320 de manière à déboucher dans le logement 210 du corps 21 du boîtier 20. Un alésage 312 du même type peut aussi être ménagé dans le palier 310 pour déboucher dans la chambre 110 de l'embase 11 du support 10.

Les constituants d'un dispositif selon l'invention et, en particulier le support 10 et le boîtier 20 avec ce qui leur est associé, sont faits en matériaux appropriés par exemple synthétiques tels qu'une résine, et sont obtenus par exemple par moulage.

Tous les constituants d'un dispositif selon l'invention sont rassemblés, réunis, assemblés et montés comme cela ressort clairement de l'examen des figures du dessin, après mise en place préalable correcte d'un afficheur convenablement adapté, dans le logement 210.

Le couvercle et le compartiment du corps sont réunis l'un à l'autre par exemple par soudage aux ultrasons, par collage, par emboîtement, par encliquetage élastique ou similaire, comme il est bien connu.

On se reporta maintenant aux Figures 1 à 3 où est illustré un mode de réalisation d'un dispositif selon l'invention destiné à être implanté dans le panneau intérieur d'une portière de véhicule.

Comme on peut l'observer, le support et le boîtier présentent des configurations et des silhouettes adaptées à l'élément du véhicule, ici le panneau intérieur d'une portière, destiné à les recevoir.

On met d'abord en place le support 10 dans la découpe 101 de l'élément mobile 10. Lors de l'insertion, les pattes élastiques 121 des moyens de retenue 12 s'effacent pendant la traversée de la paroi puis reprennent spontanément leur position initiale sous l'action de leur élasticité inhérente, ce qui a pour effet de verrouiller en place le support. Au besoin, les raccords électriques 50 ont été au préalable engagés dans la chambre 110 au travers des orifices 111. On assure ensuite la connexion électrique du boitier 20 au travers d'un orifice approprié dans le fond du boîtier, puis on ouvre le volet de la trappe 23 pour assurer les branchements aux bornes, comme il est classique. Ensuite, on met en place le boîtier dans le support en engageant les tourillons dans les rampes en vis-à-vis. Cette insertion est facilitée par le fait que les tourillons et/ou doigts sont portés par les lames ou oreilles élastiques.

La mise en oeuvre du dispositif se fait comme suit.

On suppose qu'initialement le dispositif est dans la position illustrée sur la Figure 1A qui correspond à la première position où l'écran de l'afficheur n'est pratiquement pas visible. On soulève alors le boîtier à l'aide du dispositif de préhension comme symbolisé par une flèche jusqu'à ce que celui-ci soit suffisamment apparent et extrait du support par translation avant de pouvoir basculer en fin de course pour prendre sa deuxième position où l'écran est apparent. Ce basculement est favorisé par la présence d'un ajour approprié ménagé dans le support, comme clairement illustré. A ce moment, l'arrêtoir et l'appui viennent en contact et les butées qu'ils constituent ainsi maintiennent l'afficheur immobilisé dans le boîtier dans la position où son écran est visible de l'extérieur au travers de la baie vitrée de la portière. L'écran est à la fois visible de l'intérieur et de l'extérieur du véhicule. On insère alors une carte à mémoire appropriée dans la fente et on active l'afficheur en agissant convenablement sur les touches ad hoc. Ceci permet à l'opérateur de s'assurer que l'afficheur est en état d'opérer et qu'il porte les informations initiales correctes.

Pour revenir à la situation initiale, il suffit d'opérer en ordre inverse.

On se reportera maintenant aux Figures 4 à 7 qui illustrent un autre mode de réalisation d'un dispositif selon l'invention destiné à être implanté dans le couvercle d'un vide-poches ou une boîte à gants.

On observera au préalable que pour ce mode de réalisation, il suffit que le boîtier soit mobile en rotation relativement au support sans qu'il soit nécessaire qu'il puisse se déplacer aussi en translation par coulissement des tourillons dans les rampes.

Le support est mis en place dans la découpe appropriée de l'élément mobile ici le couvercle d'une boîte à gants ou d'un vide-poches d'une planche de bord, qui ménage un emplacement approprié. On opère d'une manière similaire à celle qui a été indiquée précédemment. Dans le cas présent, les connexions électriques éventuelles se font par l'intermédiaire des alésages ménagés dans l'axe des tourillons et des paliers.

Comme on le voit, dans ce mode de réalisation, l'organe de préhension et le verrou sont d'un seul tenant. Les connexions électriques sont établies d'une manière similaire à celle qui a été indiquée à propos du mode de réalisation précédent.

Pour procéder à la mise en oeuvre du dispositif on opère comme il est indiqué par la suite.

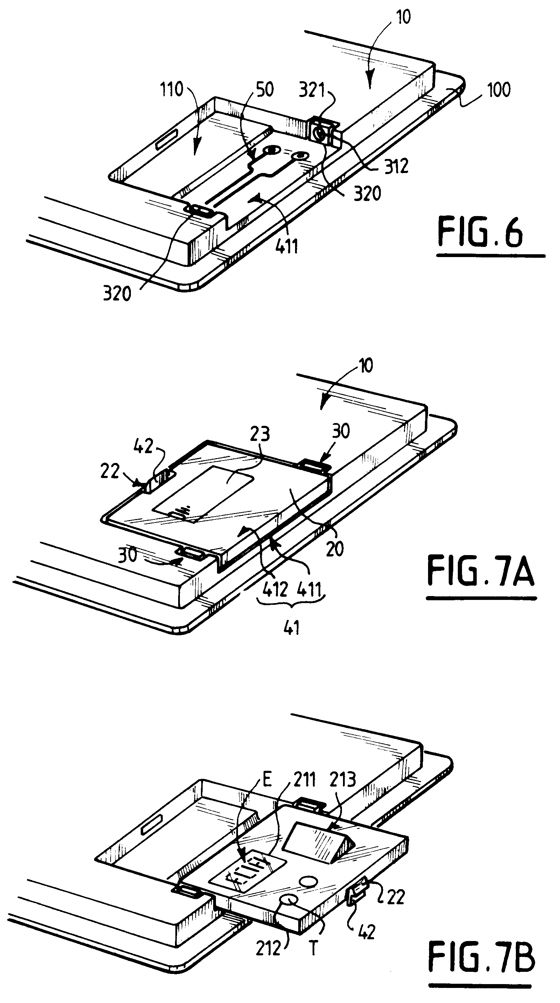

On suppose qu'à l'état initial, le dispositif est dans la situation illustrée sur la Figure 7A après ouverture préalable du couvercle. Dans cette situation, on voit qu'après ouverture du couvercle, le boîtier occupe normalement sa première position par rapport au support. On agit alors sur le verrou-organe de préhension et on fait basculer d'un demi-tour le boîtier avec l'afficheur qu'il contient pour le placer dans la seconde position où il est illustré sur la Figure 7B.

La suite des opérations se déroule comme indiqué précédemment.

On se reportera maintenant aux Figures 8 à 11 qui illustre un autre mode de réalisation d'un dispositif selon l'invention destiné à être implanté dans l'un ou l'autre des pare-soleil qui équipe habituellement les sièges avant d'un véhicule.

On procède d'abord à la mise en place des deux demi-cadres du support, comme indiqué précédemment, avec insertion pratiquement simultanée du boîtier dans lequel a été préalablement mis en place l'afficheur et après avoir procédé au besoin aux connexions électriques d'une manière similaire à celle indiquée précédemment en mettant à profit les alésages des tourillons et des paliers et la trappe de visite.

La mise en oeuvre de ce mode de réalisation s'opère comme il est indiqué par la suite.

On suppose qu'en position initiale, le dispositif est dans sa première position où il est illustré sur la Figure 8A pour laquelle le pare-soleil a été préalablement rabattu derrière un pare-brise non illustré.

On active l'afficheur comme précédemment indiqué puis on fait tourner d'un demi-tour le boîtier relativement à son support de préférence selon un axe médian vertical comme illustré pour qu'il se présente dans la situation illustrée sur la Figure 8B où il occupe sa seconde position.

Ce qui précède montre qu'il est possible grâce au dispositif selon l'invention de faire apparaître de manière visible depuis l'extérieur d'un véhicule des informations qui sont données à l'intérieur du véhicule afin de pouvoir en assurer le suivi ou le contrôle directement depuis l'extérieur du véhicule.

Ce qui précède montre l'intérêt de l'invention et expose les avantages qu'elle offre pour résoudre le problème visé.

## Revendications

1. Dispositif permettant de rendre visible de l'extérieur au travers d'une baie d'un véhicule automobile les informations d'un afficheur (A) à écran (E), mis en oeuvre à l'aide d'une carte amovible à mémoire (M), placé à l'intérieur du véhicule et porté par un élément (100) de ce dernier, le dispositif étant du type comprenant au moins une touche (T) de commande, un support (10) qui est destiné à être fixé à cet élément (100) et qui est fait d'une embase (11) délimitant une chambre (110) et de moyens de retenue (12) pour son montage sur cet élément (100), un boitier (20) qui est destiné à être monté mobile dans la chambre (11) de ce support (10) et qui est fait d'un corps (21) avec un logement (210) pour recevoir cet afficheur (A) et qui est pourvu d'une fenêtre (211) pour laisser voir l'écran (E) de l'afficheur (A) et d'au moins une ouverture (212) pour la manoeuvre de la touche (T) ainsi que d'une fente (213) pour l'insertion de la carte (M), un mécanisme de guidage (30) pour assujettir sur ce support (10) ce boîtier (20) afin de lui permettre un déplacement aboutissant à une première position où cet écran (E) est visible de l'extérieur au travers de cette baie, un agencement d'immobilisation (40) pour maintenir fixe le boîtier (20) relativement au support (10) dans ladite première position et des raccords électriques (50) pour connecter l'afficheur (A), caractérisé en ce que le boîtier (20) est également pourvu d'un organe de préhension (22) et d'une trappe (23) de visite, la touche (T) étant également visible de l'extérieur au travers de la baie du véhicule, le mécanisme de guidage (30) permettant un guidage de course déterminée entre une deuxième position où l'écran (E) n'est pratiquement pas visible de l'extérieur du véhicule au travers de la baie et la première position, l'agencement d'immobilisation (40) permettant également le maintien du boîtier (20) relativement au support (10) dans ladite seconde position.

2. Dispositif selon la revendication 1, caractérisé en ce que le mécanisme de guidage (30) comprend au moins un guide (31) et un doigt (32) coopérant avec ce guide (31) dont l'un de ceux-ci (31, 32) est porté par le support (10) et l'autre de ceux-ci (31, 32) est porté par le boîtier (20).

3. Dispositif selon la revendication 2, caractérisé en ce que le guide (31) comprend un palier (310) et le doigt (32) comprend un tourillon (320) de manière à rendre mobile en rotation le boitier (20).

4. Dispositif selon la revendication 3, caractérisé en ce que le guide (31) comprend aussi une rampe (311) où peut se déplacer le tourillon (320) de manière à rendre mobile aussi en translation le boîtier (20).

5. Dispositif selon l'une quelconque des revendications 3 et 4, caractérisé en ce que l'un au moins de ces palier (310) et tourillon (320) est porté par une lame (321) élastique.

6. Dispositif selon l'une quelconque des revendications 1 à 5, caractérisé en ce que l'agencement d'immobilisation (40) comprend des butées (41) pour définir la seconde position du boîtier (20) et un verrou (42) pour maintenir le boîtier (20) dans sa première position.

7. Dispositif selon la revendication 6, caractérisé en ce que les butées (41) comprennent un arrêtoir (411) sur l'embase (11) du support (10) et un appui (412) sur le corps (21) du boîtier (20).

8. Dispositif selon l'une quelconque des revendications 1 à 7 dont le support (10) est destiné à être fixé dans une découpe (101) ménagée dans l'élément (100) et définissant un emplacement (102) pour recevoir le support (10), caractérisé en ce que les moyens de retenue (12) sont au moins une languette (121) élastique voire un rebord (122).

9. Dispositif selon l'une quelconque des revendications 1 à 8, caractérisé en ce que l'embase (11) du support (10) est faite de deux demi-cadres (13) symétriques complémentaires munis de moyens d'assemblage (130).

10. Dispositif selon la revendication 9, caractérisé en ce que les moyens d'assemblage (130) opèrent par encliquetage élastique.

11. Dispositif selon l'une quelconque des revendications 1 à 10, caractérisé en ce que l'embase (11) du support (10) est pourvu d'au moins un orifice (111) débouchant dans la chambre (110) pour le passage des raccords électriques (50).

12. Dispositif selon l'une quelconque des revendications 2 à 11, caractérisé en ce qu'au moins le doigt (32) est transpercé d'un alésage (322) débouchant dans le logement (210) pour le passage des raccords électriques (50).

13. Dispositif selon l'une quelconque des revendications 6 à 12, caractérisé en ce que l'organe de préhension (23) et le verrou (42) sont d'un seul tenant.

14. Dispositif selon l'une quelconque des revendications précédentes, caractérisée en ce que l'élément (100) du véhicule est un élément mobile choisi parmi un panneau intérieur de portière, un couvercle de boîte à gants et un pare-soleil.

## Claims

1. Device enabling information from an indicator (A) with a screen (E), used with the aid of a removable memory card (M), disposed inside a motor vehicle, and carried by an element (100) thereof, to be made visible from the exterior through an opening of the vehicle, the device being of the type comprising at least one control button (T), a support (10) which is intended to be fixed to the element (100) and is constituted by a base (11) defining a chamber (110), and retaining means (12) for its mounting on the element (100), a casing (20) which is intended to be mounted movably in the chamber (110) of the support (10) and is constituted by a body (21) with a seat (210) for housing the indicator (A), and which has a window (211) for allowing the screen (E) of the indicator (A) to be seen and at least one aperture (212) for the operation of the button (T), as well as a slot (213) for the insertion of the card (M), a guide mechanism (30) for fixing the casing (20) on the support (10) in order to permit a displacement thereof ending at a first position in which the screen (E) is visible from the exterior through the opening, an immobilizing arrangement (40) for keeping the casing (20) fixed relative to the support (10) in the said first position, and electrical connections (50) for connecting the indicator (A), characterized in that the casing (20) also has a gripping member (22) and an inspection flap (23), the button (T) also being visible from the exterior through the opening in the vehicle, the guide mechanism (30) permitting guiding with a predetermined path between a second position in which the screen (E) is practically invisible from the exterior of the vehicle through the opening and the first position, the immobilizing arrangement (40) also enabling the casing (20) to be supported relative to the support (10) in the said second position.

2. Device according to Claim 1, characterized in that the guide mechanism (30) comprises at least one guide (31) and one finger (32) cooperating with the guide (31), of which one (31, 32) is carried by the support (10) and the other (31, 32) is carried by the casing (20).

3. Device according to Claim 2, characterized in that the guide (31) comprises a bearing (310) and the finger (32) comprises a swivel pin (320) so as to render the casing (20) rotatable.

4. Device according to Claim 3, characterized in that the guide (31) also comprises a ramp (311) on which the swivel pin (320) can move so as to render the casing (20) also translatable.

5. Device according to either of Claims 3 and 4, characterized in that at least one of the bearing (310) and the swivel pin (320) is carried by a resilient plate (321).

6. Device according to any one of Claims 1 to 5, characterized in that the immobilizing arrangement (40) comprises abutments (41) for defining the second position of the casing (20) and a catch (42) for keeping the casing (20) in its first position.

7. Device according to Claim 6, characterized in that the abutments (41) comprise a stop (411) on the base (11) of the support (10) and a bearing element (412) on the body (21) of the casing (20).

8. Device according to any one of Claims 1 to 7, of which the support (10) is intended to be fixed in a cut-out portion (101) formed in the element (100) and defining a place (102) for housing the support (10), characterized in that the retaining means (12) are at least one resilient tongue (121), or one edge (122).

9. Device according to any one of Claims 1 to 8, characterized in that the base (11) of the support (10) is constituted by two complementary, symmetrical half-frames (13) provided with assembly means (130).

10. Device according to Claim 9, characterized in that the assembly means (130) operate by resilient catching.

11. Device according to any one of Claims 1 to 10, characterized in that the base (11) of the support (10) has at least one hole (111) opening into the chamber (110) for the passage of the electrical connections (50).

12. Device according to any one of Claims 2 to 11, characterized in that at least the finger (32) has a through-hole (322) opening in the seat (210) for the passage of the electrical connections (50).

13. Device according to any one of Claims 6 to 12, characterized in that the gripping member (23) and the catch (42) are in one piece.

14. Device according to any one of the preceding claims, characterized in that the element (100) of the vehicle is a movable element selected from an inner door panel, a glove box lid, and a sun visor.

## Patentansprüche

1. Vorrichtung, welche das Sichtbarmachen der Informationen eines Anzeigegeräts (A) mit Bildschirm (E) von außen durch eine Öffnung eines Kraftfahrzeugs gestattet, benutzt mittels einer abnehmbaren Speicherkarte (M), angeordnet im Inneren des Fahrzeuge und getragen von einem Element (100) des letzteren, wobei die Vorrichtung von einer Art ist, welche wenigstens eine Steuertaste (T), einen Träger (10), der für eine Befestigung an diesem Element (100) bestimmt ist und sich aus einer eine Kammer (110) begrenzenden Halterung (11) und Haltemitteln (12) zu seiner Montage an diesem Element (100) aufbaut, ein Gehäuse (20), welches zu einer beweglichen Anbringung in der Kammer (11) dieses Trägers (10) bestimmt ist und sich aus einem Körper (21) mit einer Aufnahme (210) zur Aufnahme dieses Anzeigegeräts (A) aufbaut und mit einem Fenster (211) zur Sichtbarlassung des Bildschirms (E) des Anzeigegeräts (A) und wenigstens einar Öffnung (212) zur Betätigung der Taste (T) sowie mit einem Schlitz (213) zum Einführen der Karte (M) versehen ist, einen Führungsmechanismus (30) zur sicheren Anbringung dieses Gehäuses (20) an diesem Träger (10), derart, daß es eine Versetzung durchführen kann, die in einer ersten Stellung mündet, in der dieser Bildschirm (E) durch die Fahrzeugöffnung von außen sichtbar ist, eine Festlegungseinrichtung (40) zum Festhalten des Gehäuses (20) in Bezug auf den Träger (10) in der ersten Stellung sowie elektrische Anschlüsse (50) zum Anschließen des Anzeigegeräts (A) aufweist, dadurch gekennzeichnet, daß das Gehäuse (20) auch mit einer Greifeinrichtung (22) und einer Schauklappe (23) versehen ist, wobei die Taste (T) auch von außen durch die Fahrzeugöffnung sichtbar ist, der Führungsmechanismus (30) eine Führung mit festgelegtem Lauf zwischen einer zweiten Stellung, in der der Bildschirm (E) von außerhalb des Fahrzeuge durch die Fahrzeugöffnung praktisch nicht sichtbar ist, und der ersten Stellung gestattet, die Festlegungseinrichtung (40) auch das Halten des Gehäuses (20) in Bezug auf den Träger (10) in der zweiten Stellung gestattet.

2. Vorrichtung nach Anspruch 1, dadurch gekennzeichnet, daß der Führungsmechanismus (30) wenigstens eine Führung (31) und einen mit der Führung (31) zusammenwirkenden Finger (32) aufweist, von denen der oder die eine (31, 32) auf dem Träger (10) und der oder die andere (31, 32) auf dem Gehäuse (20) sitzt.

3. Vorrichtung nach Anspruch 2, dadurch gekennzeichnet, daß die Führung (31) ein Lager (310) und der Finger (32) einen Zapfen (320) aufweist, derart, daß das Gehäuse (20) drehbeweglich wird.

4. Vorrichtung nach Anspruch 3, dadurch gekennzeichnet, daß die Führung (31) auch eine Rampe (311) aufweist, auf der sich der Zapfen (320) versetzen kann, derart, daß das Gehäuse (20) auch verschiebbar wird.

5. Vorrichtung nach irgendeinem der Ansprüche 3 und 4, dadurch gekennzeichnet, daß das Lager (310) und/oder der Zapfen (320) von einer elastischen Zunge (321) getragen wird.

6. Vorrichtung nach irgendeinem der Ansprüche 1 bis 5, dadurch gekennzeichnet, daß die Festlegungseinrichtung (40) Anschläge (41) zum Definieren der zweiten Stellung des Gehäuses (20) und einen Riegel (42) zum Halten des Gehäuses (20) in seiner ersten Stellung aufweist.

7. Vorrichtung nach Anspruch 6, dadurch gekennzeichnet, daß die Anschläge (41) einen Feststeller (411) an dar Halterung (11) des Trägers (10) und eine Abstützung (412) am Körper (21) des Gehäuses (20) aufweisen.

8. Vorrichtung nach irgendeinem der Ansprüche 1 bis 7, wobei der Träger (10) für eine Befestigung in einem Ausschnitt (110) bestimmt ist, der in dem Element (100) ausgebildet ist und einen Platz (102) zur Aufnahme des Trägers (10) definiert, dadurch gekennzeichnet, daß die Haltemittel (12) wenigstens eine Zunge (121), mehr noch eine Randleiste (122) sind.

9. Vorrichtung nach irgendeinem der Ansprüche 1 bis 8, dadurch gekennzeichnet, daß die Halterung (11) des Trägers (10) aus zwei symmetrischen komplementären Halbrahmen (13) besteht, die mit Zusammensetzmitteln (130) versehen sind.

10. Vorrichtung nach Anspruch 9, dadurch gekennzeichnet, daß die Zusammensetzmittel (130) durch elastisches Einrasten wirken.

11. Vorrichtung nach irgendeinem der Ansprüche 1 bis 10, dadurch gekennzeichnet, daß die Halterung (11) des Trägers (10) mit wenigstens einer in der Kammer (110) mündenden Öffnung (111) für den Durchtritt der elektrischen Anschlüsse (50) versehen ist.

12. Vorrichtung nach irgendeinem der Ansprüche 2 bis 11, dadurch gekennzeichnet, daß wenigstens der Finger (32) von einer in der Aufnahme (210) mündenden Bohrung (322) für den Durchtritt der elektrischen Anschlüsse (50) durchsetzt ist.

13. Vorrichtung nach irgendeinem der Ansprüche 6 bis 12, dadurch gekennzeichnet, daß die Greifeinrichtung (23) und der Riegel (42) aus einem Stück sind.

14. Vorrichtung nach irgendeinem der vorstehenden Ansprüche, dadurch gekennzeichnet, daß das Element (100) des Fahrzeugs ein bewegliches Element, ausgewählt aus einem Türinnenblech, einem Handschuhfachdeckel und einer Sonnenblende, ist.
